# EUROPÄISCHE PATENTANMELDUNG

(11) **EP 3 879 551 A1**
(43) Veröffentlichungstag der Anmeldung: **15.09.2021**
(21) Anmeldenummer: 20162938.3
(22) Anmeldetag: 13.03.2020
(51) Int. Cl.: H01H 23/24, G05B 19/042, H05B 47/18

(54) **ELEKTRISCHES SCHALTGERÄT FÜR DIE ELEKTRISCHE GEBÄUDEINSTALLATION UND EIN ENTSPRECHENDES VERFAHREN**

(71) Anmelder: Gira Giersiepen GmbH & Co. KG, 42477 Radevormwald (DE)
(72) Erfinder: Foglia, Alexander, 42781 Haan (DE); Christmann, Felix, 10997 Berlin (DE)
(74) Vertreter: Angerhausen, Christoph

(57) **Zusammenfassung**

Die Erfindung betrifft ein elektrisches Schaltgerät (1) für die elektrische Gebäudeinstallation, wobei das elektrische Schaltgerät (1) ein Gehäuse (2) und/oder eine Abdeckung (3) und an einer Außenseite des Gehäuses (2) oder der Abdeckung (3) mindestens eine zu der Außenseite offene Aufnahme (4) für einen Datenträger (5) aufweist, so dass bei in die Aufnahme (4) eingesetztem Datenträger (5) der Datenträger (5) an der Außenseite freiliegt, wobei das elektrische Schaltgerät (1) weiterhin eine Datenschnittstelle (6) zum Auslesen des Datenträgers (5) und zwei sich voneinander unterscheidende technische Funktionszustände aufweist, von denen das elektrische Schaltgerät (1) einen ersten Funktionszustand einnimmt, wenn der Datenträger (5) in der Aufnahme (4) aufgenommen ist, und von denen das elektrische Schaltgerät (1) einen zweiten Funktionszustand einnimmt, wenn der Datenträger (5) aus der Aufnahme (4) entnommen ist. Es wird ebenso ein entsprechendes Verfahren beschrieben.

## Beschreibung

Die Erfindung betrifft ein elektrisches Schaltgerät für die elektrische Gebäudeinstallation sowie ein entsprechendes Verfahren. Ein derartiges Schaltgerät ist beispielsweise in der DE 10 2011 054 357 B4 beschrieben.

Die DE 10 2016 003 182 A1 beschreibt ein elektrisches Schaltgerät, das ein erstes und ein zweites Schaltteil aufweist, wobei das zweite Schaltteil auf dem ersten abnehmbar montiert werden kann und wenigstens eine berührungsempfindliche Schaltfläche aufweist. Durch die Trennung der beiden Schaltteile wird erreicht, dass das zweite Schaltteil getauscht oder von einem Anwender mitgenommen oder mitgebracht werden kann, und damit ein personalisiertes Bedienlayout geschaffen werden kann,

Die DE 10 2004 060 510 B4 beschreibt einen weiteren elektrischen Schalter oder Taster, einen Dimmer oder eine Steckdose, wobei in einer Abdeckung, in einem Abdeckrahmen oder dergleichen ein RFID-Transponder angeordnet sein kann. Der RFID-Transponder ist dazu vorgesehen, die Komponente betreffende Informationen, beispielsweise die exakte Position der Komponente in einem Gebäude zu dokumentieren, sodass beispielsweise durch einfaches berührungsloses Auslesen eine Reproduzierung einer Verschaltung der elektrischen Installation erreicht werden kann.

Elektrische Schaltgeräte können beispielsweise in ein Bussystem der elektrischen Gebäudeinstallation integriert sein, über das sie mit mindestens einem Aktor oder Sensor kommunikativ verbunden sind. Für die Konfiguration des Schaltgeräts ist es demnach erforderlich, dass das Schaltgerät einem bestimmten Aktor oder Sensor, oder einer Mehrzahl dieser, zugeordnet wird, um eine eindeutige Ansteuerung dieser durch das elektrische Schaltgerät zu ermöglichen. Wenn das elektrische Schaltgerät beispielsweise ein Lichtschalter sein soll, ist es erforderlich, dass dieses elektrische Schaltgerät über eine entsprechende Konfiguration des Gebäudeautomationssystems einem bestimmten Schaltaktor zugeordnet wird, der beispielsweise dazu eingerichtet ist, Netzspannung einer Lichtquelle zuzuführen. Diese Zuordnung bzw. Konfiguration des Gebäudeautomationssystems ist mitunter aufwendig, insbesondere dann, wenn eine Vielzahl von Schaltgeräten und Aktoren bzw. Sensoren miteinander zu verknüpfen sind. Insbesondere sind die aus dem Stand der Technik bekannten elektrischen Schaltgeräte nicht dazu vorbereitet, bedarfsweise ohne großen technischen Aufwand auch von einem mit der Konfiguration von Gebäude Automationssystemen nicht vertrauten Anwender neu konfiguriert zu werden, das heißt beispielsweise eine Neuzuordnung des betreffenden elektrischen Schaltgeräts einem abweichenden Aktor oder Sensor zu ermöglichen.

Es ist demgemäß die Aufgabe der Erfindung, ein elektrisches Schaltgerät der eingangs beschriebenen Art derart weiterzuentwickeln, dass es für die intuitive Konfiguration vorbereitet ist.

Diese Aufgabe wird durch ein elektrisches Schaltgerät mit den Merkmalen des Anspruchs 1 gelöst. Der nebengeordnete Anspruch 14 betrifft ein entsprechendes Verfahren für die Konfiguration eines Gebäudeautomationssystems. Die abhängigen Ansprüche betreffen jeweils vorteilhafte Ausführungsform der Erfindung.

Demgemäß ist bei einem elektrischen Schaltgeräts für die elektrische Gebäudeinstallation vorgesehen, dass das elektrische Schaltgerät ein Gehäuse und/oder eine Abdeckung und an einer Außenseite des Gehäuses oder der Abdeckung mindestens eine zu der Außenseite offene Aufnahme für einen Datenträger aufweist, sodass bei in die Aufnahme eingesetztem Datenträger der Datenträger an der Außenseite freiliegt. Das elektrische Schaltgerät weist weiterhin eine Datenschnittstelle zum Auslesen des Datenträgers auf. Weiterhin weist das elektrische Schaltgerät zwei sich voneinander unterscheidende technische Funktionszustände auf, von denen das elektrische Schaltgerät einen ersten Funktionszustand einnimmt, wenn der Datenträger in der Aufnahme aufgenommen ist, und von denen das elektrische Schaltgerät einen zweiten Funktionszustand einnimmt, wenn der Datenträger aus der Aufnahme entnommen ist.

Der erste Funktionszustand und der zweite Funktionszustand können dabei die Konfiguration des elektrischen Schaltgeräts betreffende Funktionszustände sein. Beispielsweise kann der erste Funktionszustand die eindeutige Zuordnung des elektrischen Schaltgeräts zu einem bestimmten Aktor oder Sensor eines Gebäudeautomationssystems betreffen, während der zweite Funktionszustand ein nicht zugeordneter Zustand des elektrischen Schaltgeräts ist. So kann beispielsweise vorgesehen sein, dass bei aus der Aufnahme entnommenem oder davon abgehobenem Datenträger das elektrische Schaltgerät in einen unzugeordneten Zustand zurückfällt und erst mit der Annäherung des Datenträgers der Aufnahme bzw. erst mit dem Einsetzen des Datenträgers in oder an der Aufnahme das elektrische Schaltgerät einem bestimmten Sensor oder Aktor des Gebäudeautomationssystems zugeordnet und damit eine Betätigung des zugeordneten Sensors oder Aktors über das elektrische Schaltgerät möglich ist.

Alternativ oder zusätzlich kann der erste Funktionszustand, bei dem der Datenträger in der Aufnahme aufgenommen ist, ein Funktionszustand sein, in welchem das elektrische Schaltgerät bzw. das Gebäudeautomationssystems, dessen Bestandteil das elektrische Schaltgerät ist, eine Parametrisierung aufweisen bzw. einen der Parametrisierung entsprechenden Funktionszustand einnehmen. Demgemäß kann der zweite Funktionszustand ein Zustand sein, in welchem das elektrische Schaltgerät entweder keine Parametrisierung annimmt.

Grundsätzlich kann vorgesehen sein, dass das elektrische Schaltgerät bei aus der Aufnahme entnommenem Datenträger zunächst den ersten Funktionszustand beibehält, mithin der zweite Funktionszustand dem ersten Funktionszustand entspricht, wobei erst die erneute Annäherung eines Datenspeichers dem elektrischen Schaltgeräts, insbesondere die erneute Aufnahme eines (neuen) Datenträgers in der Aufnahme eine neue Konfiguration bzw. eine neue Parametrisierung des ersten Funktionszustands auslöst, in welchen das elektrische Schaltgerät versetzt wird.

Der Datenträger kann mindestens einen Speicher aufweisen, in dem mindestens eine Zustandsänderungsanweisung gespeichert ist, etwa eine Parametrisierung bzw. mindestens eine Zuordnung des elektrischen Schaltgeräts zu mindestens einem Sensor oder Aktor eines Gebäudeautomationssystems, in welchem das elektrische Schaltgerät enthalten ist, bzw. an welches das elektrische Schaltgerät über eine Busleitung angeschlossen ist.

Die Aufnahme des elektrischen Schaltgeräts ist vorzugsweise derart ausgebildet, dass der Datenträger, wenn er in der Aufnahme aufgenommen ist, zumindest größtenteils zu einer frei zugänglichen Außenseite des elektrischen Schaltgeräts freiliegt und somit für die manuelle Betätigung zugänglich ist. Es ist demgemäß insbesondere nicht zwangsläufig vorgesehen, dass der Datenträger vollständig oder zumindest größtenteils in der Aufnahme aufgenommen ist. Insbesondere kann die Funktion der Aufnahme dahingehend beschränkt sein, dass eine Ausrichtung des Datenträgers in Bezug auf die Außenseite des Gehäuses oder der Abdeckung, an welcher die Aufnahme ausgebildet ist, eingehalten ist.

Es kann beispielsweise vorgesehen sein, dass bei in die Aufnahme eingesetztem Datenträger der Datenträger die Aufnahme vollständig bedeckt und/oder überdeckt, sodass die Aufnahme bei in die Aufnahme eingesetztem Datenträger nicht sichtbar ist. Dabei kann beispielsweise vorgesehen sein, dass eine außenliegende Dekorseite des Datenträgers eine Außenseite des Gehäuses oder der Abdeckung des elektrischen Schaltgeräts in ästhetisch ansprechender Weise bildet.

Die Datenschnittstelle kann eine Drahtlosschnittstelle für die Nahfeldkommunikation und der Datenträger im Nahfeld der Datenschnittstelle drahtlos auslesbar sein, wobei die Drahtlosschnittstelle vorzugsweise eine NFC-Schnittstelle und der Datenträger vorzugsweise einen RFID-Chip aufweist. Die Datenschnittstelle und der Datenträger können insbesondere dazu eingerichtet sein, dass die Annäherung des Datenträgers an die Aufnahme oder zumindest der Zustand erkannt wird, wenn der Datenträger in der Aufnahme aufgenommen ist, woraufhin das selbsttätige Auslesen des Datenträgers über die Datenschnittstelle von dem elektrischen Schaltgerät initiiert wird. Alternativ kann an dem elektrischen Schaltgerät ein manuell zu betätigender Taster oder dergleichen vorgesehen sein, mithilfe welches die Auslesung des Datenträgers manuell ausgelöst werden kann. Diese Ausführungsform weist jedoch ästhetische Nachteile gegenüber dem zuvor beschriebenen, selbsttätigen Auslesen des Datenträgers und ist daher weniger bevorzugt.

Die mindestens eine Aufnahme kann an einer Außenseite einer Schaltwippe des elektrischen Schaltgeräts ausgebildet oder von der Außenseite der Schaltwippe gebildet sein, sodass die Aufnahme um eine Schwenkachse der Schaltwippe verschwenkbar ist. Der Datenträger kann Abmessungen aufweisen, welche den Außenabmessungen der Schaltwippe entsprechen, sodass bei in die Aufnahme eingesetztem Datenträger der Datenträger die Schaltwippe vollständig überdeckt. Die Außenseite des Datenträgers bildet bei dieser Ausführungsform folglich eine Betätigungsfläche der Schaltwippe. Demgemäß kann der Datenträger eine Betätigungsfläche des elektrischen Schaltgeräts sein, vorzugsweise eine Tastfläche eines Tastsensors oder eine Betätigungsfläche einer Schaltwippe.

Der Datenträger kann plattenförmig ausgebildet sein oder einen plattenförmigen Korpus aufweisen, in dem ein drahtlos auslesbarer Chip, beispielsweise ein RFID-Chip, aufgenommen ist. Plattenförmig kann dabei insbesondere bedeuten, dass der Datenträger in zwei Raumdimensionen eine wesentlich größere Abmessung aufweist, als in einer dritten Abmessung. Beispielsweise kann der Datenträger In den zwei Raumrichtungen mit den größeren Abmessungen entsprechend den Abmessungen einer Betätigungsfläche einer Schaltwippe eines Schalters der Gebäudeinstallation bemessen sein, wobei er in einer dritten Raumrichtung, also senkrecht zu der Betätigungsfläche der Schaltwippe, eine wesentlich geringere Abmessung aufweist, vorzugsweise eine Abmessung von weniger als 1 cm, besonders bevorzugt eine Abmessung von weniger als 7 mm und ganz besonders bevorzugt eine Abmessung von weniger als 5 mm.

Der Datenträger kann eine Sandwichstruktur aufweisen, mit einer äußeren Dekorschicht und einer der mindestens einen Aufnahme zugewandten Halteschicht mit mindestens einem Befestigungsmittel, das mit der mindestens einen Aufnahme in Eingriff steht. Dem um einen schnellen Austausch des Datenträgers zu erlauben, ist das Befestigungsmittel vorzugsweise ein solches, welches Werkzeug los zu betätigen ist, beispielsweise weist das Befestigungsmittel mindestens einen Magnet auf. Um eine definierte Ausrichtung des Datenträgers in Bezug auf die Außenseite des Gehäuses oder der Abdeckung zu ermöglichen, kann an der Außenseite mindestens eine Formschlusskontur vorgesehen sein, welche mit einer komplementären Formschlusskontur des Datenträgers in Eingriff steht, vorzugsweise formschlüssig in Eingriff steht. Die Formschlusskontur und/oder die komplementäre Formschlusskontur kann eine Anlaufschräge aufweisen, um eine Selbstausrichtung des Datenträgers in Bezug auf die Aufnahme zu begünstigen.

Das Befestigungsmittel kann eine von der der Aufnahme zugewandten Seite der Halteschicht vorstehende Formschlusskontur sein, die in die mindestens eine Aufnahme eingreift. Dabei kann die Formschlusskontur insbesondere ein einteilig an die Halteschicht angeformter Vorsprung sein. Die Formschlusskontur kann insbesondere dazu eingerichtet sein, eine eindeutige Drehposition des Datenträgers in Bezug auf das Gehäuse und/oder die Abdeckung und in der Ebene parallel zu der Außenseite des Gehäuses und/oder der Abdeckung zu definieren.

Zwischen der Dekorschicht und der Halteschicht kann eine den Datenträger aufweisende Trägerplatte angeordnet sein. Die Trägerplatte kann aus einem Kunststoffmaterial gefertigt sein, welches durchlässig für elektromagnetische Strahlung ist. In das Kunststoffmaterial kann ein Chip, beispielsweise ein RFID-Chip, eingebettet sein.

Die Aufnahme kann mindestens eine Formschlusskontur aufweisen, die bei in die Aufnahme eingesetztem Datenträger formschlüssig mit einer komplementären Formschlusskontur an einer der Außenseite zugewandten Innenseite des Datenträgers ineinander greift. Die Aufnahme kann beispielsweise als eine Ausnehmung in der Außenseite des Gehäuses oder der Abdeckung ausgebildet sein. Die Ausnehmung kann beispielsweise eine unrunde Kontur aufweisen, beispielsweise kann die Ausnehmung als eine langlochförmige Vertiefung ausgebildet sein. Die Funktion der Formschlusskonturen kann insbesondere darin bestehen, eine definierte Position des Datenträgers in der Ebene der Außenseite des Gehäuses oder der Abdeckung zu definieren. Sind darüber hinaus Befestigungsmittel bereitgestellt, mithilfe welcher der Datenträger an der Außenseite festgelegt ist, ist in dem Zusammenwirken der Befestigungsmittel und der Formschlusskontur von eine definierte und reproduzierbare Ausrichtung des Datenträgers in Bezug auf die Außenseite vorgegeben. Darüber hinaus kann das Befestigungsmittel ein wieder auslöst bares Befestigungsmittel sein, beispielsweise eine Magnetverbindung, sodass nach dem Belieben eines Anwenders der Datenträger an der Außenseite festgelegt und von dieser wieder abgenommen werden kann.

Mindestens eines von Aufnahme und Datenträger kann an seiner bei in die Aufnahme eingesetztem Datenträger einander zugewandten Seiten ein Befestigungsmittel, etwa einen Permanentmagnet, aufweisen.

Eines von Aufnahme und Datenträger kann an seiner dem jeweils anderen Element zugwandten Seite als Befestigungsmittel einen Magnet, etwa einen Permanentmagnet, und das andere der beiden Elemente ein ferromagnetisches Metall aufweisen, die einander gegenüberliegend angeordnet sind.

Das ferromagnetische Metall kann plattenförmig ausgebildet und in eine der Aufnahme zugewandte Seite des Datenträgers eingelassen ist und vorzugsweise zu dieser freiliegend angeordnet sein.

In eine Betätigungsfläche des elektrischen Schaltgeräts, vorzugsweise in eine Tastfläche eines Tastsensors oder in eine Betätigungsfläche einer Schaltwippe, kann gegenüberliegend zu dem plattenförmigen ferromagnetischen Metall ein Magnet als der Befestigungsmittel eingelassen sein, der eine wirksame Fläche parallel zur Betätigungsfläche aufweist, die kleiner als eine Fläche des plattenförmigen ferromagnetischen Metalls parallel zur Betätigungsfläche ist.

Gemäß einem anderen Aspekt der Erfindung wird ein Verfahren für die Konfiguration eines Gebäudeautomationssystems beschrieben, das mindestens ein elektrisches Schaltgerät der zuvor beschriebenen Art aufweist, das über ein Bussystem und vorzugsweise einen Server des Gebäudeautomationssystems mit einer Mehrzahl Aktoren und/oder Sensoren kommunikativ in Verbindung steht. Das Verfahren weist die Schritte auf:
a) Annähern des Datenträgers der Aufnahme des elektrischen Schaltgeräts und Festlegen des Datenträgers in der Aufnahme,
b) Auslesen des Datenträgers über die Datenschnittstelle, woraufhin das elektrische Schaltgerät entsprechend einer dabei ausgelesenen Zustandsänderungsanweisung von einem ersten Funktionszustand in einen zweiten Funktionszustand überführt wird; und
c) manuelles Betätigen des elektrischen Schaltgeräts, vorzugweise einer Schaltwippe oder einer Sensortaste des elektrischen Schaltgeräts, wobei das elektrische Schaltgerät von einem ersten Schaltzustand in einen zweiten Schaltzustand, der sich von dem ersten unterscheidet, überführt wird.

Das Überführen des elektrischen Schaltgeräts von einem ersten Funktionszustand in einen zweiten Funktionszustand kann das Zuordnen des elektrischen Schaltgeräts genau eines der Mehrzahl Aktoren und/oder Sensoren oder einer bestimmten Teilmenge dieser aufweisen.

Das manuelle Betätigen kann das Überführen des Aktors und/oder des Sensors bzw. der bestimmten Teilmenge dieser von einem ersten Betriebszustand in einen zweiten Betriebszustand aufweisen.

Weitere Einzelheiten der Erfindung werden anhand der nachstehenden Figuren erläutert. Dabei zeigt:
- Figur 1: in perspektivischen Darstellung eine beispielhafte Ausführungsform eines elektrischen Schaltgeräts;
- Figur 2: eine weitere perspektivische Darstellung der Ausführungsform gemäß Figur 1 mit montiertem Datenträger;
- Figur 3: eine Querschnittsansicht der Ausführungsform gemäß Figur 1 mit von der Aufnahme abgehobenem Datenträger; und
- Figur 4: eine Querschnittsansicht der Anordnung gemäß Figur 3, wobei der Datenträger in die Aufnahme eingesetzt ist.

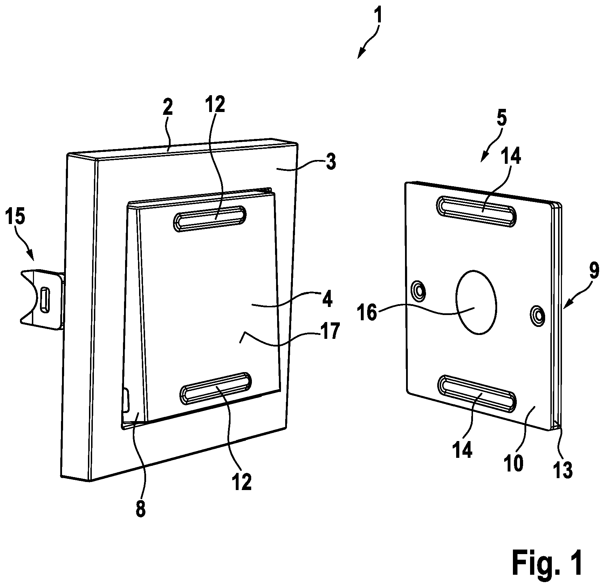

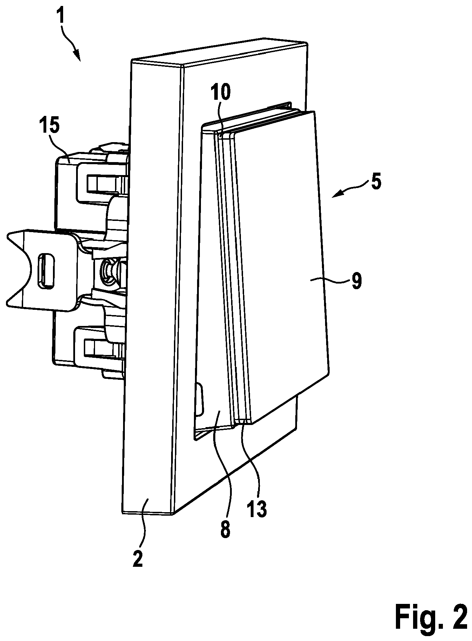

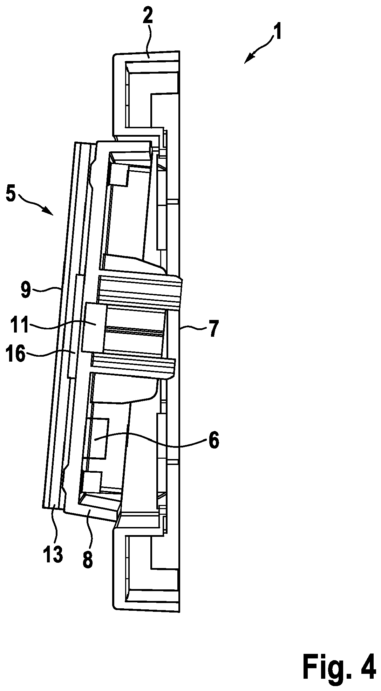

Die Figuren 1 bis 4 zeigen eine beispielhafte Ausführungsform eines erfindungsgemäßen elektrischen Schaltgeräts 1 für die elektrische Gebäudeinstallation. Das elektrische Schaltgerät 1 kann beispielsweise in einem Gebäudeautomationssystems verwendet werden, in das das elektrische Schaltgerät 1 über ein Bussystem eingebunden ist, wobei über das Bussystem Schalt- und/oder sonstige Steuerbefehle zwischen dem elektrischen Schaltgeräts 1 und einem von dem elektrischen Schaltgerät 1 angesteuerten Sensor und/oder Aktoren ausgetauscht werden können. Beispielsweise kann das elektrische Schaltgerät 1 ein Lichtschalter sein, der für die Betätigung eine Schalterwippe 8 aufweist. Das elektrische Schaltgerät 1 weist einen Unterputz-Doseneinsatz 15 auf und kann dadurch beispielsweise anstelle eines üblichen Lichtschalters in einer vorhandenen Gebäudeinstallation verwendet werden.

Das elektrische Schaltgerät 1 weist ein Gehäuse 2 sowie einer Gehäuseabdeckung 3 auf, an deren Außenseite die Schalterwippe 8 angeordnet ist, entsprechend einem aus dem Stand der Technik bekannten handelsüblichen elektromechanischen Schalter. Eine Vorderseite der Schalterwippe 8 weist in ebenso handelsüblicher Weise eine Betätigungsfläche 17 für die Betätigung des elektrischen Schaltgeräts 1 auf. Die Betätigungsfläche 17 wiederum ist als eine Aufnahme 4 für die form- und kraftschlüssige Verbindung eines Datenträgers 5 ausgebildet. Dazu weist die Schalterwippe 8 an ihrer Außenseite eine Aufnahme 4 auf. Die Aufnahme 4 weist Formschlussaufnahmen 12 auf, die vorliegend als längliche Vorsprünge ausgebildet sind, die sich erhaben von der Betätigungsfläche 17 erstrecken.

Der Datenträger 5 weist an seiner der Betätigungsfläche 17 zugewandten Innenseite eine Halteschicht 10 auf, in welcher komplementäre Formschlusskonturen 14 ausgebildet sind, welche dementsprechend komplementär zu den Formschlusskonturkonturen 12 an der Betätigungsseite 17 als langlochartige Ausnehmungen ausgebildet sind. Die Formschlusskonturen und 12 und die komplementären Formschlusskonturen 14 sind geometrisch so ausgebildet, dass bei in der Aufnahme 4 bzw. auf der Betätigungsfläche 17 aufgesetztem Datenträger 5 die Formschlusskonturen 12, 14 formschlüssig ineinandergreifen und vorzugsweise vollflächig formschlüssig miteinander in Verbindung stehen, sodass der Datenträger 5 in Bezug auf die Schaltwippe 8 und insbesondere in Bezug auf die Aufnahme 4 an der Betätigungsseite 17 definiert positioniert ist und sich bei aufgesetztem Datenträger 5 ein ästhetisch ansprechendes Design des elektrischen Schaltgeräts 1 ergibt.

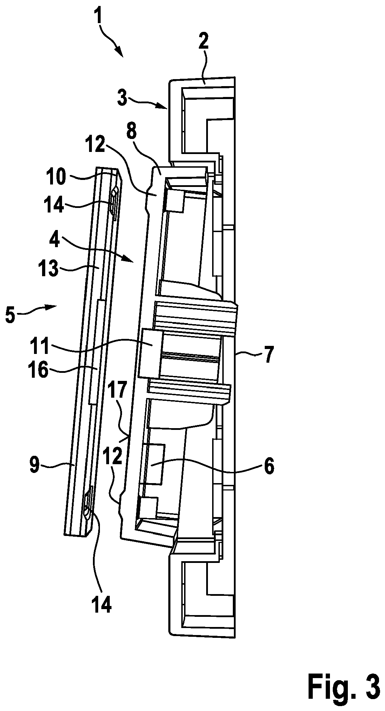

Eingebettet in die Aufnahme 4 und um wenige Millimeter beanstandet von der Betätigungsseite 17 ist ein als Magnet ausgebildetes Befestigungsmittel 11 angeordnet. Dieses ist von der in Figur 1 dargestellten Außenansicht auf die Betätigungsseite 17 bzw. auf die Aufnahme 4 zu erkennen und vollständig von der Betätigungsseite 17 überdeckt. Der Datenträger 5 weist an seiner der Aufnahme 4 zugewandten Innenseite neben den komplementären Formschlusskonturen 14 weiterhin ein plattenförmiges ferromagnetisches Metall 16 auf, welches bei auf der Aufnahme 4 angeordneten Datenträger 5 dem als Magnet ausgebildeten Befestigungsmittel 11 gegenüberliegend angeordnet ist. Wie in der Zusammenschau der Figuren 1 und 3 zu erkennen ist, weist das ferromagnetische Metall 16 eine dem Befestigungsmittel 11 gegenüberstehende Fläche auf, die größer als die Querschnittsfläche des Magneten 11 ist. Durch das Zusammenwirken zwischen dem Befestigungsmittel 11 und der ferromagnetischen Platte 16 sowie durch die Anlaufkonturen der Formschlusskonturen und 12 und der komplementären Formschlusskonturen 14 weist der Datenträger 5 in Bezug auf die Aufnahme 4 eine Selbstzentrierung auf, wenn der Datenträger 5 der Aufnahme 4 angenähert wird.

Wie in Figur 3 erkennen ist, ist eine Datenschnittstelle 6, die als eine NFC-Schnittstelle ausgebildet ist, in der Schaltwippe 8 aufgenommen, um das Auslesen eines Speichers in dem Datenträger 5 zu ermöglichen. Die Datenschnittstelle 6 kann auch an jeder anderen Stelle in oder an dem elektrischen Schaltgerät 1 angeordnet sein, welche dazu geeignet ist, den Datenträger 5 drahtlos auszulesen. Der Datenträger 5 kann demgemäß einen RFID-Chip aufweisen, der im Nahfeld der Datenschnittstelle 6 auslesbar ist. Die in dem Datenspeicher des Datenträgers 5 enthaltene Information kann eine Konfiguration des elektrischen Schaltgeräts 1 aufweisen. Diese Konfiguration ist grundsätzlich auch keine bestimmten Daten beschränkt und kann beispielsweise auch Parametrisierungsdaten aufweisen. Gemäß einer beispielhaften Ausführungsform kann in dem Datenträger 5 eine Information vorgehalten sein, welche dazu eingerichtet ist, eine eindeutige Zuordnung zwischen dem elektrischen Schaltgerät 1 und einem bestimmten Aktor oder Server, der beispielsweise über ein Bussystem mit dem elektrischen Schaltgerät 1 verbunden ist, herzustellen, sodass der betreffende Aktor oder Sensor über das elektrische Schaltgerät 1 angesteuert werden kann. Durch das Austauschen des Datenträgers 5, welches aufgrund der Konstruktion der Befestigungsmittel 11 und 16 werkzeuglos erfolgen kann, kann auch die Zuordnung des elektrischen Schaltgeräts 1 zu einem bestimmten Sensor oder Aktor des Gebäudeautomationssystems leicht variiert werden.

Der Datenträger 5 weist einen dreischichtigen Aufbau auf, mit einer äußeren Dekorschicht 9, einer inneren Halteschicht 10, in welche die komplementären Formschlusskonturen 14 eingebracht sind und durch welche die ferromagnetische Platte 16 hindurchragt, und mit einer dazwischen liegenden Trägerplatte 13, in welche ein Speicherchip, beispielsweise ein drahtlos auslesbarer RFID-Chip eingebettet ist. Zumindest die Halteschicht 10 sowie die Trägerplatte 3 können vorteilhafterweise aus einem für elektromagnetische Strahlung durchlässigen Material ausgebildet sein, um das verlustfreie Auslesen des Datenspeichers zu erlauben, etwa aus einem Kunststoff wie Polycarbonat. Ebenso kann die Schalterwippe 8, wie dies grundsätzlich aus dem Stand der Technik bekannt ist, aus einem solchen Kunststoffmaterial ausgebildet sein, welches für elektromagnetische Strahlung durchlässig ist.

Mit dem erfindungsgemäßen elektrischen Schaltgerät 1 wird eine Anordnung bereitgestellt, bei welcher durch einfaches und reversibles Ansetzen eines Datenträgers 5 in einer Aufnahme des elektrischen Schaltgeräts 1 eine Konfiguration des Schaltgeräts 1 erreicht werden kann. Die form- und kraftschlüssigen Verbindungsmittel 11, 12, 14, 16 zwischen dem Datenträger 5 und der Schalterwippe 8 sind derart ausgebildet, dass ein einfaches Austauschen des Datenträgers 5 ermöglicht wird, um die Konfiguration gemäß den Belieben eines Anwenders variieren zu können. Beispielsweise kann in der zuvor beschriebenen Weise durch Austauschen der Datenträger 5 eine Zuordnung des elektrischen Schaltgeräts 1 zu einem bestimmten Sensor oder Aktor oder einer Mehrzahl dieser, welche in einem Gebäudeautomationssystems beispielsweise über ein Busnetzwerk miteinander verbunden sind, variiert werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: elektrisches Schaltgerät
- 2: Gehäuse
- 3: Abdeckung
- 4: Aufnahme
- 5: Datenträger
- 6: Datenschnittstelle
- 7: Schwenkachse
- 8: Schaltwippe
- 9: Dekorschicht
- 10: Halteschicht
- 11: Befestigungsmittel
- 12: Formschlusskontur
- 13: Trägerplatte
- 14: komplementäre Formschlusskontur
- 15: Unterputz-Doseneinsatz
- 16: ferromagnetisches Metall
- 17: Betätigungsfläche

## Patentansprüche

1. Elektrisches Schaltgerät (1) für die elektrische Gebäudeinstallation, wobei das elektrische Schaltgerät (1) ein Gehäuse (2) und/oder eine Abdeckung (3) und an einer Außenseite des Gehäuses (2) oder der Abdeckung (3) mindestens eine zu der Außenseite offene Aufnahme (4) für einen Datenträger (5) aufweist, so dass bei in die Aufnahme (4) eingesetztem Datenträger (5) der Datenträger (5) an der Außenseite freiliegt, wobei das elektrische Schaltgerät (1) weiterhin eine Datenschnittstelle (6) zum Auslesen des Datenträgers (5) und zwei sich voneinander unterscheidende technische Funktionszustände aufweist, von denen das elektrische Schaltgerät (1) einen ersten Funktionszustand einnimmt, wenn der Datenträger (5) in der Aufnahme (4) aufgenommen ist, und von denen das elektrische Schaltgerät (1) einen zweiten Funktionszustand einnimmt, wenn der Datenträger (5) aus der Aufnahme (4) entnommen ist.

2. Elektrisches Schaltgerät (1) nach Anspruch 1, bei dem die Datenschnittstelle (6) eine Drahtlosschnittstelle für die Nahfeldkommunikation und der Datenträger (5) im Nahfeld der Datenschnittstelle (6) drahtlos auslesbar ist, wobei die Drahtlosschnittstelle vorzugsweise eine NFC-Schnittstelle und der Datenträger (5) vorzugsweise einen RFID-Chip aufweist.

3. Elektrisches Schaltgerät (1) nach Anspruch 1 oder 2, bei dem die mindestens eine Aufnahme (4) an einer Außenseite einer Schaltwippe (8) des elektrischen Schaltgeräts (1) ausgebildet oder von der Außenseite der Schaltwippe (8) gebildet ist, sodass die Aufnahme (4) um eine Schwenkachse (7) der Schaltwippe (8) verschwenkbar ist.

4. Elektrisches Schaltgerät (1) nach einem der vorangegangenen Ansprüche, bei dem der Datenträger (5) eine Betätigungsfläche des elektrischen Schaltgeräts (1) ist, vorzugsweise eine Tastfläche eines Tastsensors oder eine Betätigungsfläche einer Schaltwippe (8).

5. Elektrisches Schaltgerät (1) nach einem der vorangegangenen Ansprüche, bei dem der Datenträger (5) plattenförmig ausgebildet ist oder einen plattenförmigen Korpus aufweist, in dem ein drahtlos auslesbarer Chip, vorzugweise ein RFID-Chip, aufgenommen ist.

6. Elektrisches Schaltgerät (1) nach Anspruch 5, bei dem der Datenträger (5) eine Sandwichstruktur aufweist, mit einer äußeren Dekorschicht (9) und einer der mindestens einen Aufnahme (4) zugewandten Halteschicht (10) mit mindestens einem Befestigungsmittel (11), das mit der mindestens einen Aufnahme (4) in Eingriff steht.

7. Elektrisches Schaltgerät (1) nach Anspruch 6, bei dem das Befestigungsmittel (11) eine von der der Aufnahme (4) zugewandten Seite der Halteschicht (10) vorstehende Formschlusskontur (12) aufweist, die in die mindestens eine Aufnahme (4) eingreift.

8. Elektrisches Schaltgerät (1) nach Anspruch 6 oder 7, bei dem zwischen der Dekorschicht (9) und der Halteschicht (10) eine den Datenträger (5) aufweisende Trägerplatte (13) angeordnet ist.

9. Elektrisches Schaltgerät (1) nach einem der vorangegangenen Ansprüche, bei dem die Aufnahme (4) mindestens eine Formschlusskontur (12) aufweist, die bei in die Aufnahme (4) eingesetztem Datenträger (5) formschlüssig mit einer komplementären Formschlusskontur (14) an einer der Außenseite zugewandten Innenseite des Datenträgers (5) ineinander greift.

10. Elektrisches Schaltgerät (1) nach einem der vorangegangenen Ansprüche, bei dem mindestens eines von Aufnahme (4) und Datenträger (5) an ihren bei in die Aufnahme (4) eingesetztem Datenträger (5) einander zugewandten Seiten einen Befestigungsmittel (11) aufweist.

11. Elektrisches Schaltgerät (1) nach einem der vorangegangenen Ansprüche, bei dem eines von Aufnahme (4) und Datenträger (5) an seiner dem jeweils anderen Element zugwandten Seite als Befestigungsmittel (11) einen Magneten und das andere der beiden Elemente ein ferromagnetisches Metall (16) aufweist, die einander gegenüberliegend angeordnet sind.

12. Elektrisches Schaltgerät (1) nach Anspruch 11, bei dem das ferromagnetische Metall (16) plattenförmig ausgebildet und in eine der Aufnahme (4) zugewandte Seite des Datenträgers (5) eingelassen ist und vorzugsweise zu dieser freiliegt.

13. Elektrisches Schaltgerät (1) nach Anspruch 12, bei dem in eine Betätigungsfläche (17) des elektrischen Schaltgeräts (1), vorzugsweise in eine Tastfläche eines Tastsensors oder in eine Betätigungsfläche (17) einer Schaltwippe (8), gegenüberliegend zu dem plattenförmigen ferromagnetischen Metall (16) ein Magnet als das Befestigungsmittel (11) eingelassen ist, der eine wirksame Fläche parallel zur Betätigungsfläche (17) aufweist, die kleiner als eine Fläche des plattenförmigen ferromagnetischen Metalls (16) parallel zur Betätigungsfläche (17) ist.

14. Verfahren für die Konfiguration eines Gebäudeautomationssystems, das mindestens ein elektrisches Schaltgerät (1) nach einem der vorangegangenen Ansprüche aufweist, das über ein Bussystem und vorzugsweise einen Server des Gebäudeautomationssystems mit einer Mehrzahl Aktoren und/oder Sensoren kommunikativ in Verbindung steht, wobei das Verfahren die Schritte aufweist:
- Annähern des Datenträgers (5) der Aufnahme (4) des elektrischen Schaltgeräts (1) und Festlegen des Datenträgers (5) in der Aufnahme (4),
- Auslesen des Datenträgers (5) über die Datenschnittstelle (6), woraufhin das elektrische Schaltgerät (1) entsprechend einer dabei ausgelesenen Zustandsänderungsanweisung von einem ersten Funktionszustand in einen zweiten Funktionszustand überführt wird; und
- manuelles Betätigen des elektrischen Schaltgeräts (1), vorzugweise einer Schaltwippe (8) oder einer Sensortaste des elektrischen Schaltgeräts (1), wobei das elektrische Schaltgerät (1) von einem ersten Schaltzustand in einen zweiten Schaltzustand, der sich von dem ersten unterscheidet, überführt wird.

15. Verfahren nach Anspruch 14, bei dem das Überführen des elektrischen Schaltgeräts (1) von einem ersten Funktionszustand in einen zweiten Funktionszustand das Zuordnen des elektrischen Schaltgeräts (1) genau eines der Mehrzahl Aktoren und/oder Sensoren oder einer bestimmten Teilmenge dieser aufweist, wobei das manuelle Betätigen das Überführen des Aktors und/oder des Sensors bzw. der bestimmten Teilmenge dieser von einem ersten Betriebszustand in einen zweiten Betriebszustand aufweist.

## Geänderte Patentansprüche

### Geänderte Patentansprüche gemäss Regel 137(2) EPÜ.

1. Schalter für die elektrische Gebäudeinstallation, wobei der Schalter (1) ein Gehäuse (2) und/oder eine Abdeckung (3) und an einer Außenseite des Gehäuses (2) oder der Abdeckung (3) mindestens eine zu der Außenseite offene Aufnahme (4) für einen Datenträger (5) aufweist, so dass bei in die Aufnahme (4) eingesetztem Datenträger (5) der Datenträger (5) an der Außenseite freiliegt, wobei der Schalter (1) weiterhin eine Datenschnittstelle (6) zum Auslesen des Datenträgers (5) und zwei sich voneinander unterscheidende technische Funktionszustände aufweist, von denen der Schalter (1) einen ersten Funktionszustand einnimmt, wenn der Datenträger (5) in der Aufnahme (4) aufgenommen ist, und von denen der Schalter (1) einen zweiten Funktionszustand einnimmt, wenn der Datenträger (5) aus der Aufnahme (4) entnommen ist, wobei
die mindestens eine Aufnahme (4) an einer Außenseite einer Schaltwippe (8) des Schalters (1) ausgebildet oder von der Außenseite der Schaltwippe (8) gebildet ist, sodass die Aufnahme (4) um eine Schwenkachse (7) der Schaltwippe (8) verschwenkbar ist,
die Aufnahme (4) als eine Ausnehmung in der Außenseite ausgebildet ist, wobei der Datenträger (5) plattenförmig ausgebildet ist oder einen plattenförmigen Korpus aufweisen, in dem ein drahtlos auslesbarer Chip, beispielsweise ein RFID-Chip, aufgenommen ist,
der Datenträger (5) eine Betätigungsfläche der Schaltwippe (8) ist und in zwei Raumdimensionen eine wesentlich größere Abmessung aufweist, als in einer dritten Raumdimension, und
der Datenträger (5) in den zwei Raumrichtungen mit den größeren Abmessungen die Außenabmessungen der Betätigungsfläche der Schaltwippe (8) und in einer dritten Raumrichtung, nämlich senkrecht zu der Betätigungsfläche der Schaltwippe (8) eine wesentlich geringere Abmessung aufweist.

2. Schalter (1) nach Anspruch 1, bei dem die Datenschnittstelle (6) eine Drahtlosschnittstelle für die Nahfeldkommunikation und der Datenträger (5) im Nahfeld der Datenschnittstelle (6) drahtlos auslesbar ist, wobei die Drahtlosschnittstelle vorzugsweise eine NFC-Schnittstelle und der Datenträger (5) vorzugsweise einen RFID-Chip aufweist.

3. Schalter (1) nach Anspruch 1, bei dem der Datenträger (5) eine Sandwichstruktur aufweist, mit einer äußeren Dekorschicht (9) und einer der mindestens einen Aufnahme (4) zugewandten Halteschicht (10) mit mindestens einem Befestigungsmittel (11), das mit der mindestens einen Aufnahme (4) in Eingriff steht.

4. Schalter (1) nach Anspruch 1, bei dem das Befestigungsmittel (11) eine von der der Aufnahme (4) zugewandten Seite der Halteschicht (10) vorstehende Formschlusskontur (12) aufweist, die in die mindestens eine Aufnahme (4) eingreift.

5. Schalter (1) nach Anspruch 1, bei dem zwischen der Dekorschicht (9) und der Halteschicht (10) eine den Datenträger (5) aufweisende Trägerplatte (13) angeordnet ist.

6. Schalter (1) nach einem der vorangegangenen Ansprüche, bei dem die Aufnahme (4) mindestens eine Formschlusskontur (12) aufweist, die bei in die Aufnahme (4) eingesetztem Datenträger (5) formschlüssig mit einer komplementären Formschlusskontur (14) an einer der Außenseite zugewandten Innenseite des Datenträgers (5) ineinander greift.

7. Schalter (1) nach einem der vorangegangenen Ansprüche, bei dem mindestens eines von Aufnahme (4) und Datenträger (5) an ihren bei in die Aufnahme (4) eingesetztem Datenträger (5) einander zugewandten Seiten einen Befestigungsmittel (11) aufweist.

8. Schalter (1) nach einem der vorangegangenen Ansprüche, bei dem eines von Aufnahme (4) und Datenträger (5) an seiner dem jeweils anderen Element zugwandten Seite als Befestigungsmittel (11) einen Magneten und das andere der beiden Elemente ein ferromagnetisches Metall (16) aufweist, die einander gegenüberliegend angeordnet sind.

9. Schalter (1) nach Anspruch 8, bei dem das ferromagnetische Metall (16) plattenförmig ausgebildet und in eine der Aufnahme (4) zugewandte Seite des Datenträgers (5) eingelassen ist und vorzugsweise zu dieser freiliegt.

10. Schalter (1) nach Anspruch 9, bei dem in eine Betätigungsfläche (17) des Schalters (1), vorzugsweise in eine Tastfläche eines Tastsensors oder in eine Betätigungsfläche (17) einer Schaltwippe (8), gegenüberliegend zu dem plattenförmigen ferromagnetischen Metall (16) ein Magnet als das Befestigungsmittel (11) eingelassen ist, der eine wirksame Fläche parallel zur Betätigungsfläche (17) aufweist, die kleiner als eine Fläche des plattenförmigen ferromagnetischen Metalls (16) parallel zur Betätigungsfläche (17) ist.
